# EUROPEAN PATENT SPECIFICATION

(11) **EP 4 041 630 B1**
(45) Date of publication and mention of the grant of the patent: **12.06.2024**
(21) Application number: 20793057.9
(22) Date of filing: 07.10.2020
(51) Int. Cl.: B64D 11/00, B64D 11/06

(54) **AN AIRCRAFT PASSENGER ACCOMMODATION UNIT**
UNTERBRINGUNGSEINHEIT FÜR FLUGZEUGPASSAGIERE
UNITÉ DE RÉCEPTION DE PASSAGER D'AÉRONEF

(30) Priority: 08.10.2019 GB 201914495
(43) Date of publication of application: 17.08.2022
(73) Proprietor: Safran Seats GB Limited, Cwmbran NP44 3HQ (GB)
(72) Inventor: WATKINS, Alan, Lakeside Close, Cwmbran NP44 3HQ (GB); RILEY, Michael, Lakeside Close, Cwmbran NP44 3HQ (GB)
(74) Representative: Abel & Imray LLP
(86) International application number: PCT/GB2020/052470
(87) International publication number: WO 2021/069883

(56) References cited:
- WO-A1-2014/147449
- JP-U- S5 536 268
- US-A1- 2018 281 963
- US-A1- 2019 210 733

## Description

### BACKGROUND OF THE INVENTION

The present disclosure relates to an aircraft passenger accommodation unit.

The present invention concerns aircraft passenger accommodation units. More particularly, but not exclusively, this invention concerns an aircraft passenger accommodation unit for location adjacent to an aisle in an aircraft cabin, the unit comprising a seat, having a seat pan and a seat back, a shell, at least partially surrounding the seat, wherein the shell defines an opening that allows a passenger egress between the aisle and the seat through the opening, and a door assembly, for providing variable access through the opening between the aisle and the seat.

The invention also concerns methods of opening or closing a door assembly of an aircraft passenger accommodation unit.

Business class and first class seating generally aims to provide aircraft passengers with as much privacy as possible. However, safety restrictions require that passengers are visible to cabin crew in some circumstances, and require that passengers can easily access the aisle in event of emergency. These restrictions constrain the design of aircraft passenger accommodation units.

Privacy doors for aircraft passenger accommodation units are known. US 2019/210733 discloses an aircraft passenger seat unit comprising a privacy door that can be movable in a rotational manner. US2018/281963A1 and GB254890A each disclose examples of doors of aircraft passenger accommodation units, which improve a seat occupant's privacy. US 2017/0283064 is an example of a seat unit with a door assembly including a door that slides fore and aft of a base in a primary mode of operation. The door is formed of two parts, the two parts being pivotally hinged to each other at a vertical pivot joint. A secondary mode involves a pivoting along the vertical joint.

Often, privacy doors slide or pivot between open and closed configurations, thus enabling variable levels of passenger privacy and/or variable access between the passenger seat and the aisle. Pivotable doors, such as in US 2017/0283064, often pivot outwardly into an aisle, causing an obstruction. It is desirable to maximise available space in the aircraft cabin and it is important to avoid obstructing the aisle, to allow other passengers and cabin crew to safely move about the plane.

Often, privacy doors generally use a straightforward pivoting or sliding mechanism to move between open and closed configurations. If this mechanism were to fail, passenger access to the aisle may be blocked, which is undesirable. In addition, it is desirable to enable disabled passengers to be able to access seats of such units.

The present invention seeks to mitigate the above-mentioned problems. Alternatively, or additionally, the present invention seeks to provide an improved aircraft passenger accommodation unit.

WO 2014/147449 A1 (MBANEFO) published 25 September 2014 discloses a multi-functional seat comprising a seat pan, a seat back which has a front side enabled to support a back of a person to be seated and a rear side opposite to the front side, first pivoting means that mount the seat back and enable for pivotal movements of the seat back relative to the seat pan, between an upright position, wherein the seat back extends substantially vertically upwardly relative to the seat pan, and a horizontal bedding position, wherein the seat back extends substantially in a same plane as that defined by a sitting surface of the seat pan.

### SUMMARY OF THE INVENTION

The present invention provides, according to a first aspect, an aircraft passenger accommodation unit for location adjacent to an aisle in an aircraft cabin, the unit comprising a seat, having a seat pan and a seat back, a shell, at least partially surrounding the seat, wherein the shell defines an opening that allows a passenger egress between the aisle and the seat through the opening, and a door assembly, for providing variable access through the opening between the aisle and the seat, wherein the door assembly comprises a door rotatably mounted relative to the shell, such that the door is rotatable between an open position which allows passenger egress through the opening, and a closed position in which passenger egress through the opening is at least partially blocked, wherein the door is rotatable between the open and closed positions in a plane of rotation of the door, the plane of rotation extending across the opening, characterised in that the door assembly further comprises a privacy screen movably mounted to the door, the privacy screen being moveable across the opening between a retracted position, which allows passenger egress between the seat and the aisle through the opening, and an extended position, in which passenger egress between the aisle and the seat through the opening is at least partially blocked by the privacy screen.

In other words, the plane of rotation extends in a direction corresponding to a direction across the opening. Hence, a door is provided that moves between open and closed positions by rotating across the opening, for example without rotating into or impinging on the aisle or the inside of the unit. As the door is rotatably mounted relative to the shell and rotatable in a plane of the door extending across the opening, this allows the door to be easily rotated in relation to the opening.

The door may have a length longer than 50cm, 100cm, 120cm, 130cm or 140cm. The door may have a length between 100cm and 200cm, between 120 to 170cm, or more preferably between 130cm to 160cm. The door may have a width of wider than 40cm, 50cm, 60cm or 70cm. The door may have a width between 50 and 90cm, or more preferably between 60cm and 80cm. The door may have a thickness of less than 10cm, 5cm or 2.5cm. The door may provide variable privacy for a passenger in the seat. For example, in the closed position, it provides additional/further privacy.

Preferably, the door is generally planar and wherein a plane of the door is substantially parallel to the plane of rotation of the door. This means that the door rotates substantially within (or parallel to) the plane of the door and the door rotates within a plane that extends across the opening. This minimises the aisle (or inside of the unit) impingement by the door.

Preferably, the door is rotatable about an axis of rotation that intersects the door. This provides a compact arrangement where the axis of rotation is not distal from the door. The door may be rotatable about a single axis of rotation.

More preferably, the door defines a width, when in the closed position, the width extending across the opening in between two sides of the door, and wherein the axis of rotation intersects the door at a point less than 40% along the width of the door measured from one side of the door, and preferably at a point less than 25% along the width of the door measured from the side of the door. The point may be less than 15%, or even less than 10% along the width of the door. This provides an axis of rotation near to one side of the door. This provides an effective rotational movement between the open and closed positions, providing a door able to block passenger egress in the closed position but provide passenger egress in the open position. The side of the door may be the side of the door towards the direction of rotation of the door from the closed to the open position. The width is measured substantially horizontally across the door when the door is in the closed position.

Preferably, the door defines a length, when in the closed position, the length extending along the opening between two ends of the door, and wherein the axis of rotation intersects the door at a point less than 40% along the length of the door measured from one end of the door, and preferably at a point less than 25% along the length of the door measured from the end of the door. The point may be less than 15%, or even less than 10% along the length of the door. This provides an axis of rotation near to one end of the door. This provides an effective rotational movement between the open and closed positions, providing a door able to block passenger egress in the closed position but provide passenger egress in the open position. The end of the door may be a lower end (e.g. away from the direction of rotation of the door from the closed to the open position). The length is measured substantially vertically along the door, when the door is in the closed position. The length is orthogonal to the width.

Preferably, the door is rotatable about an axis of rotation that intersects the shell behind a pivotal mounting joint of the seat back and seat pan. In the above and the following, "behind" means in the opposite direction to the seat facing direction. In other words, the axis of rotation intersects away from a front face (the surface used by passenger in the seat) of the seat back. This provides a door that, when in the open position, is substantially behind the seat back. This allows easy access to the seat from the aisle.

Preferably, the door is rotatable about an axis of rotation that intersects the shell beneath an upper surface (the surface used by passenger in the seat) of the seat pan of the seat. This provides a door that, when in the open position, is substantially beneath the seat pan. This allows easy access to the seat from the aisle.

Preferably, in the open position, a side of the seat (including the seat pan and seat back) is at least partially exposed, to allow passenger egress between the aisle and the side of the seat. Ideally, the upper surface of the seat pan is at least partially and ideally substantially or fully exposed from the side. Ideally, the front face of the seat back is at least partially and ideally substantially or fully exposed from the side.

When in the open position, the door at least partially overlaps the shell to define a first overlap area of the shell, and in the closed position, a second overlap area of the shell is defined, the first overlap area being larger than the second overlap area. The second overlap area may be zero. The door may overlap an outer surface of the shell (facing away from the seat). The door may overlap an inner surface of the shell (facing into the seat). The door may be at least partially housed (in the open position) in a cavity of the shell (in between inner and outer surfaces of the shell).

Preferably, in the open position, the access provided through the opening is at least 15cm wider, and preferably at least 25cm wider, across the opening, than in the closed position. The access width is measured across the opening between shell edges and/or door sides/ends. In other words, it is the dimension (for example, in the substantially horizontal direction) across the opening that allow passenger egress and is not obstructed by the shell or the door. The access may be at least 30cm, at least 33cm or even at least 35cm wider in the open position.

Preferably, when the door is in the open position, the access provided through the opening is at least 10% wider, and preferably at least 20% wider, across the opening, than in the closed position. The access may be at least 30%, or even at least 40% wider in the open position.

Preferably, when the door is in the open position, the door is located, at least partially, behind a pivotal mounting joint of the seat back and seat pan. More preferably, when the door is in the open position, the door is located substantially or fully behind a pivotal mounting joint of the seat back and seat pan.

Preferably, when the door is in the closed position, a lower end of the door is located at or below an upper surface of the seat pan. This allows a passengers lap, upper legs and above to be covered by the door, providing effective privacy.

Preferably, the door is rotatable between the open and closed positions through an angle of at least 75 degrees, and preferably through an angle of at least 85 degrees. Preferably, the door is rotatable between the open and closed positions through an angle of up to 95 degrees. Ideally, the door is rotatable through an angle of (approximately) 90 degrees.

This allows the door to move effectively out of the way of most or all of the opening. Preferably, there is little or no overlap of the door and the opening in the open position. The door (for example, an upper end of the door) may extend past an end of the shell in the open position. In other words, the door may partially overlap with an aircraft passenger accommodation unit behind (or in front).

Movement of the privacy screen (especially towards the extended position or away from the retracted position) in relation to the door is preferably only possible when the door is in the closed position.

The privacy screen may be translatable between extended and retracted positions. The privacy screen may be moved away from the axis of rotation of the door when moved towards the extended position.

Preferably, in the retracted position, the privacy screen at least partially overlaps the door to define a first overlap area of the door, and in the extended position a second overlap area of the door is defined, the second overlap area being smaller than the first overlap area. The second overlap area may be zero. The privacy screen effectively acts to widen the door when the privacy screen is in the extended position.

Preferably, the unit comprises a securement mechanism operable to secure the privacy screen in the retracted position with respect to the door.

Preferably, the door assembly comprises a stop mechanism configured to prevent movement of the door between the closed position and the open position when the privacy screen is not in the retracted position. This prevents the door moving from the closed position to the open position if the privacy screen is not retracted. There may be at least three configurations of the door assembly:
i) door in closed position and privacy screen at least partially extended,
ii) door in closed position and privacy screen fully retracted, and
iii) door in open position (with privacy screen fully retracted).
The door assembly may be arranged to only move between the first and third configurations through the second configuration.

Preferably, the seat further comprises an armrest, and wherein the armrest is moveably mounted relative to the seat pan, such that it can be moved between a deployed position, in which an upper surface of the armrest is above an upper surface of the seat pan, and a stowed position, in which the upper surface of the armrest is at or below the upper surface of the seat pan. The armrest may be translatable between deployed and stowed positions.

Preferably, the door is rotatably mounted to the shell by a rotation mechanism, the rotation mechanism comprising a first part fixedly connected to the shell and a second part fixedly connected to the door, the first and second parts forming a kinematic pair comprising a female cavity, and a corresponding male member, wherein the male member is rotatably mounted within the female cavity.

More preferably, the female cavity is provided on the shell and wherein the female cavity is provided within a spar tube of the shell.

Preferably, the door assembly comprises a handle portion mounted to the door, to aid movement of the door between the open and closed positions, wherein the handle portion extends beyond an end or side of the door. Hence, this increases a distance between the axis of rotation of the door (that may be near a corner/end/side of the door) and where the movement of the door is initiated from (the handle). This provides a longer moment arm and makes rotational movement of the door easier.

The handle portion may extend below a lower end of the door when the door is in the closed position. Hence, the handle portion may extend sideways from the lower end when door is in the open position.

More preferably, the handle portion provides an arc-shaped handle and wherein a centre of the arc is provided adjacent an end or side of the door, that may correspond, or be near, to the location of the axis of rotation of the door. Hence, all points on the arc-shaped handle may be substantially the same distance from, and hence provide substantially the same moment arm to, the axis of rotation of the door. For example, if the axis of rotation is at, or near, the lower end of the door, the centre of the arc may also be close to or adjacent the lower end of door.

According to a second aspect of the invention there is also provided a method of opening or closing a door assembly of an aircraft passenger accommodation unit as described above, the method comprising the step of rotating a door of the door assembly between an open position which allows passenger egress through an opening defined by a shell of the aircraft passenger accommodation unit, and a closed position in which passenger egress through the opening is at least partially blocked, wherein the door is rotated between the open and closed positions in a plane of rotation of the door, the plane of rotation extending across the opening.

Preferably, the method further comprises the step of, when the door is in the closed configuration, moving a privacy screen mounted to the door, the privacy screen being moved across the opening between a retracted position, which allows passenger egress through the opening, and an extended position, in which passenger egress through the opening is at least partially blocked by the privacy screen.

It will of course be appreciated that features described in relation to one aspect of the present invention may be incorporated into other aspects of the present invention. For example, the method of the invention may incorporate any of the features described with reference to the apparatus of the invention and vice versa.

### DESCRIPTION OF THE DRAWINGS

Embodiments of the present invention will now be described by way of example only with reference to the accompanying schematic drawings of which:
Figure 1a shows a perspective view of part of an aircraft passenger accommodation unit, according to a first embodiment of the invention, the unit having a door in a closed position;
Figure 1b shows a perspective view similar to Figure 1a, with the door in a partially open position;
Figure 1c shows a perspective view similar to Figures 1a and 1b, with the door in a fully open position;
Figure 1d shows a perspective view similar to Figures 1a, 1b and 1c, with the door in the closed position and a privacy screen in an extended position;
Figure 2a shows a side view of an aircraft passenger accommodation unit, according to a second embodiment of the invention, the unit having a door in a fully open position the Figure also showing a second similar unit in front of the first unit;
Figure 2b shows a perspective view of the unit of Figure 2a, with the door in a closed position and a privacy screen in an extended position;
Figure 2c is a perspective view of the unit of Figures 2a and 2b, with the door in a fully open position;
Figure 3 is an enlarged view of a door rotation mechanism shown in Figure 2c;
Figure 4 is an enlarged view of a latch mechanism shown in Figures 2a and 2c; and
Figure 5 is an enlarged view of the back of the door of Figures 2a to 2c, showing a running mechanism of the privacy screen.

### DETAILED DESCRIPTION

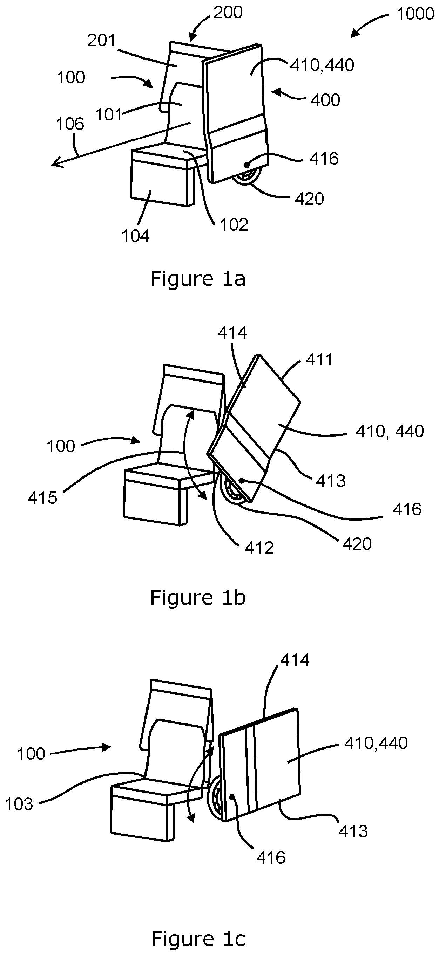

Figure 1a shows a perspective view of part of an aircraft passenger accommodation unit 1000, according to a first embodiment of the invention, the unit having a door 410 in a closed position. Figure 1b shows the door 410 in a partially open position. Figure 1c shows the door 410 in a fully open position.

The unit 1000 has a seat 100. The seat 100 is a conventional aircraft seat with a seat back 101 and seat pan 102, pivotally joined to each other so the seat back 101 can recline in relation to the seat pan 102 about pivot j oint axis 103 (shown in Figure 1c). The seat 100 also has a leg rest 104 pivotally mounted to a front of the seat pan 102. The leg rest 104 can pivot up to provide an extra support surface for a passenger in the seat 100. The seat 100 is fully reclineable into a lie-flat bed configuration. The seat face direction 106 is shown, pointing in the direction a passenger would face if sat on the seat 100.

A shell 200 partially surrounds the seat 100. As shown in Figure 1a, the shell comprises a rear shell wall 201, extending behind a rear of the seat 100. Other parts of the shell 200 are not shown.

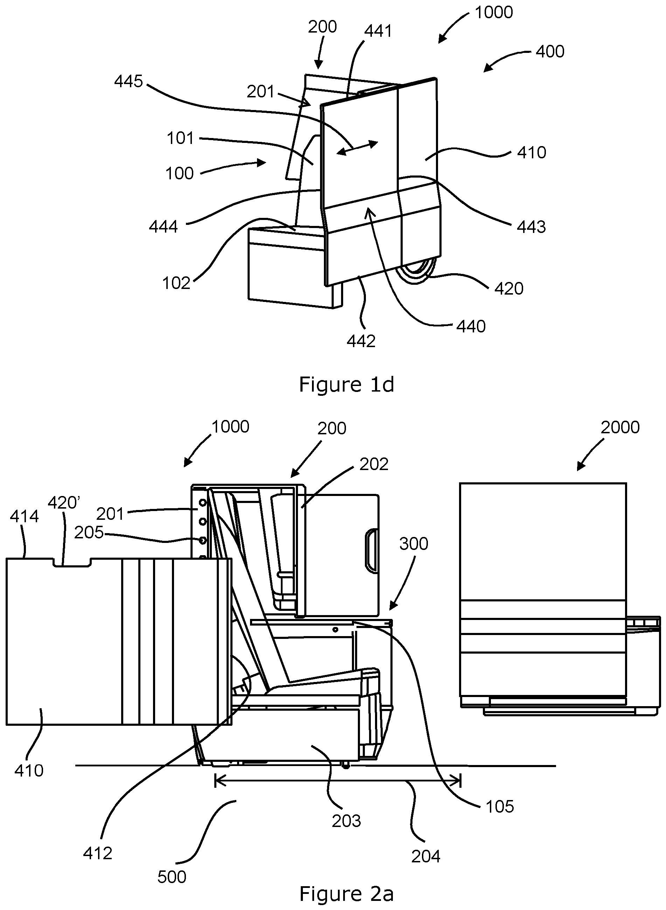

There is a door assembly 400 mounted to the shell 200. The door assembly 400 comprises a door 410 and a privacy screen 440 (shown in Figure 1d). The door 410 is a generally rectangular panel with a top end 411, bottom end 412, left side 414 and right side 413 (as viewed from the aisle and as viewed in the Figures). The door 410 is pivotally mounted to the shell 200 about an axis of rotation 416. The door has a width (between the two sides) of 71cm.

The axis 416 is substantially perpendicular to the seat facing direction 106 and substantially parallel with the pivot joint 103. The axis of rotation 416 intersects the door 410 5cm from the bottom end 412 of the door 410 and near to (20cm from) the right hand side 413. The door 410 rotates about the axis of rotation 416 in the plane of the door so that it can be rotated from the closed position of Figure 1a, through the partially open position of Figure 1b to the fully open position of Figure 1c. This involves a rotation of 90 degrees. Arrow 415 shows this planar rotational movement of the door 410.

In the closed position of the door 410 (as in Figure 1a), the door 410 is upright with the side edges 413, 414 being vertical and the top and bottom ends 411, 412 being horizontal. The top end 411 is above the head level (i.e. where a passengers head may go) of the seat 100. The bottom end 412 is slightly below the level of the seat pan 102, at 30cm above a cabin floor. The right side 413 of the door 410 is slightly behind the seat 100 (and seat back 101) and the left side 414 is approximately halfway along the depth (side dimension) of the seat pan 102.

In the open position of the door 410 (as in Figure 1c), the door 410 has been rotated by 90 degrees and is now horizontal, with the side edges 413, 414 being horizontal and the top and bottom ends 411, 412 being vertical. The top end 411 is a long way behind the seat back 101 of the seat 100. The bottom end 412 is slightly behind the pivot joint 103, such that most of the door 410 is behind a front face of the seat back 101. The right side 413 of the door 410 is slightly below the seat pan 102 and the left side 414 is at a shoulder level of the seat 100. In the open position, an additional 35cm of access width is provided to the seat 100.

An arc-shaped handle 420 is provided at the bottom end 412 of the door 410. The centre of the arc is vertically (when in the closed position) in line with the axis of rotation 416. The centre of the arc is horizontally (when in the closed position) in line with the bottom end 412 of the door 410.

Figure 1d shows a perspective view similar to Figures 1a, 1b and 1c, with the door 410 in the closed position and a privacy screen 440 in an extended position.

Here it can be seen that the privacy screen 440 is translatably mounted to the door 410 such that it can move from the retracted position (of Figures 1a to 1c) in front of the door 410, to the extended positon (of Figure 1d).

The privacy screen 440 is also a generally rectangular panel with a top end 441, bottom end 442, left side 444 and right side 443 (as viewed from the aisle and as viewed in the Figures). The privacy screen 440 is mounted such that, when in the retracted position, its right side 443 approximately lines up with the right side 413 of the door 410 and the left side of the privacy screen 444 approximately lines up with the left side 414 of the door 410. When in the extended position, the privacy screen 440 has been moved to the left (see movement arrow 445) such that the left side 444 of the privacy screen 440 is to the left of the left side 414 of the door 410.

Hence, in the retracted position, there is an overlap area (i.e. an area of overlap of the privacy screen 440 and the door 410), of an area equal to the area of the privacy screen 440. In the extended position, the overlap area is much less; approximately a third of the area of the privacy screen 440.

The privacy screen 440 can only move to the extended position when the door 410 is in the closed position. Similarly, the door 410 cannot be moved from the closed position, when the privacy screen 440 is partially or fully extended.

Figure 2a shows a side view of an aircraft passenger accommodation unit, 1000 according to a second embodiment of the invention. The unit 1000 is similar to the unit 1000 described above and only significant differences will be described. The same reference numerals will be used for like elements. In Figure 2a, the door 410 is in a fully open position.

Here, the door assembly 400 is located on the right hand side of the seat 100 (in relation to the seat facing direction 106), rather than the left hand side (as in Figures 1a to 1d).

The shell 200 comprises a rear shell wall 201 as before. Also shown is a far shell wall 202 on the far side of the shell 200 from the door 410. The shell 200 also comprises a lower section wall 203 located adjacent the side of the seat 100 below the door 410.

The unit 1000 is provided with a console 300 on the left hand side of the seat 100 (in relation to the seat facing direction 106).

The end of the rear wall 201 has a latch mechanism 205 used to latch to the door 410 when the door is in the closed position.

The door 410 does not have an arc-shaped handle, and instead has a finger notch 420' on its right side edge 414 (the side edge furthest away from the seat 100 in the closed configuration).

The seat 100 also comprises an armrest 105 that can be translated up and down in relation to the seat pan 102 between the raised position (in Figure 2a) and a lowered position (slightly below the level of the upper surface of the seat pan 102).

Also shown in Figure 2a is the aisle 500 running parallel to the seat facing direction 106. A shell opening 204 is also labelled. This is the width in the aisle direction for passenger access and extends from the door assembly 400 to the shell of a unit 2000 in front. The opening 204 is 105cm wide. With the door in the open position (as shown in Figure 2a), the access width provided is 98cm wide (7cm being blocked by the bottom end 412 of the door 410). With the door 410 closed, and the privacy screen 440 retracted, the opening 204 would be 44cm wide.

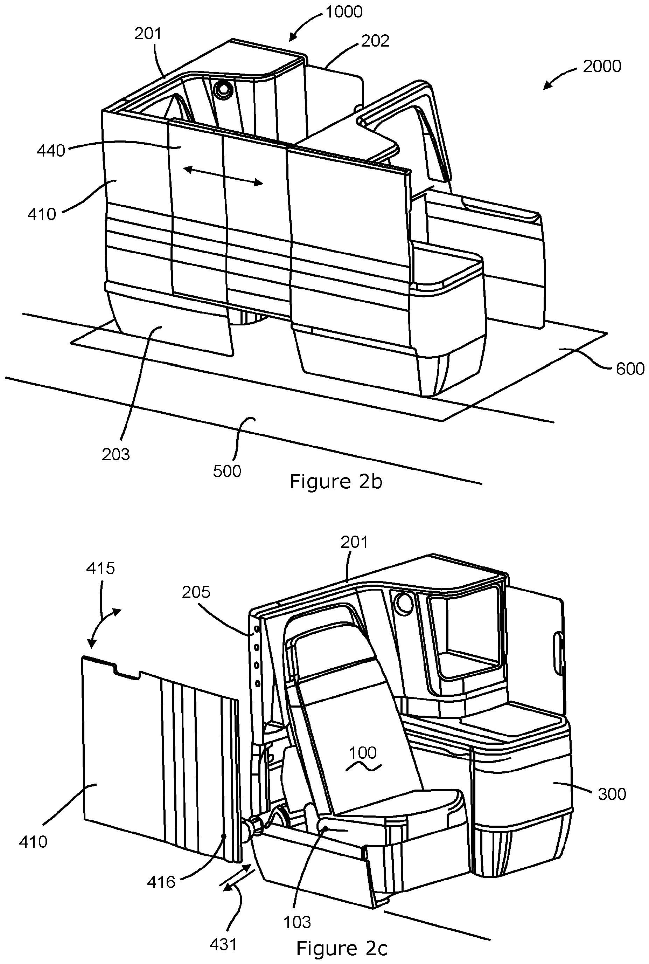

Figure 2b shows a perspective view of the unit 1000 of Figure 2a, with the door 410 in a closed position and the privacy screen 440 in an extended position. The privacy screen 440 has been extended to fully close off the opening 204 so there is no access width between the door assembly 400 and the shell of the unit in front 2000. This Figure also shows the cabin floor 600.

Figure 2c is a perspective view of the unit of Figures 2a and 2b, with the door 410 in the fully open position. This figure shows a rotation mechanism that allows the door 410 to open and close.

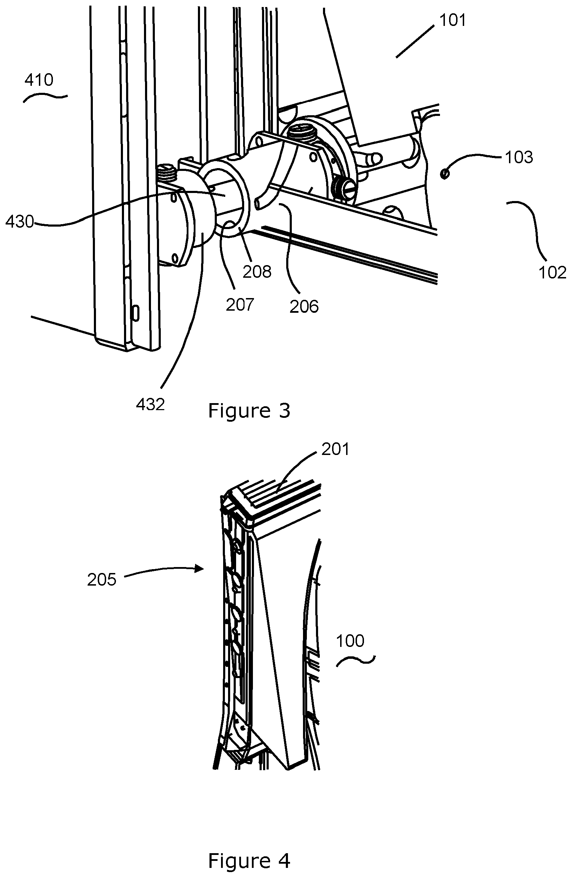

Figure 3 is an enlarged view of the door rotation mechanism shown in Figure 2c. The rotation mechanism comprises a pivot rod 430 extending from the back of the door 410. The axis of the pivot rod 430 corresponds to the axis of rotation 416 of the door. There is also an abutment ring 432 at the base of the pivot rod 430. The pivot rod is mounted in a cavity 207 in a spar tube 206 attached to the shell 200. The spar tube 206 is mounted behind and slightly below the pivot joint 103 of the seat back 101 and seat pan 102.

The pivot rod 430 can move in and out of the cavity 207 by a certain amount (see movement arrows 431 in Figure 2c). When the pivot rod 430 is fully within the cavity 207, the abutment ring 432 abuts against a front edge 208 of the spar tube 206.

When the pivot rod 430 is pulled out of the cavity 207 (to the maximum extent), the pivot rod 430 can rotate within the cavity 207 such that the door 410 can rotate between the closed and open positions.

Figure 4 is an enlarged view of the latch mechanism 205 shown in Figures 2a and 2c. The latch mechanism 205 comprises a number of raised "buttons" that are able to catch with corresponding pins on the door 410. This retains the door 410 in the closed position.

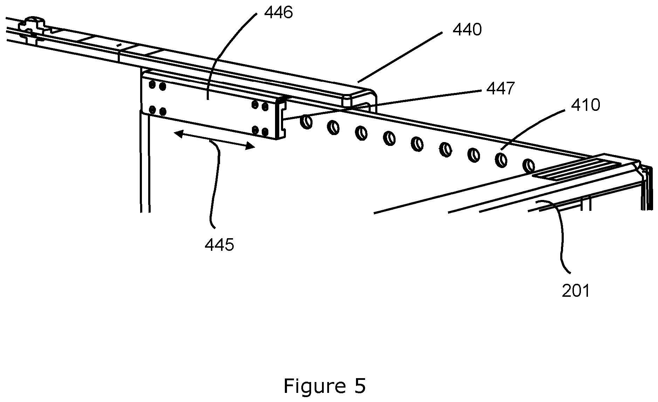

Figure 5 is an enlarged view of the back of the door of Figures 2a to 2c, showing a running mechanism of the privacy screen 440. The running mechanism comprises a guide follower (not shown) on the back of the door 410. The guide follower is contained within a C-shaped slider runner 447. This slider runner 447 is secured to the privacy screen 430 by a tab 446 (and screws). Hence, the slider runner 447 moves back and forth over the guide follower to slide the privacy screen 440 in relation to the door 410. The slider runner 447 and guide follower are biased to secure the privacy screen 440 in the retracted position in relation to the door 410.

The privacy screen 440 can only move to the extended position when the door 410 is in the closed position. Similarly, the door 410 cannot be moved from the closed position, when the privacy screen 440 is partially or fully extended. This is achieved by a stop mechanism (not shown).

In use, in either embodiment, a passenger or other user can move the door 410 between closed, partially open and open positions. This is done by rotating the door 410 (including pulling the door 410 and pivot rod 430 away from the spar tub 206, as necessary). For example, the open position of the door 410 (and optional moving of the armrest 105) allows disabled passenger access to the seat 100 from the aisle 500. The closed position may provide a suitable amount of privacy for the passenger. If the passenger requires additional privacy, the privacy screen 440 may be extended out from the door 410 to the extended position.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

Any suitable shell 200 and seat 100 design may be used.

If a moveable arm-rest 105 is provided, it may be able to move in any suitable manner, for example by pivoting or by fore-aft movement.

The plane of rotation of the door 410 may not be in the exact same direction as the opening width 204, aisle 500 and/or seat facing direction 106.

The door 410 and/or privacy screen 440 may be any suitable size or shape.

Any suitable dimensions may be employed.

Any suitable stop mechanism, door rotation mechanism, running mechanism and/or latch mechanism 205 may be used, or not used.

## Claims

1. An aircraft passenger accommodation unit (1000) for location adjacent to an aisle in an aircraft cabin, the unit (1000) comprising:
- a seat (100), having a seat pan (102) and a seat back (101),
- a shell (200), at least partially surrounding the seat (100), wherein the shell (200) defines an opening that allows a passenger egress between the aisle and the seat (100) through the opening, and
- a door assembly (400), for providing variable access through the opening between the aisle and the seat (100), wherein the door assembly (400) comprises a door (410) rotatably mounted relative to the shell (200), such that the door (410) is rotatable between an open position which allows passenger egress through the opening, and a closed position in which passenger egress through the opening is at least partially blocked,
wherein the door (410) is rotatable between the open and closed positions in a plane of rotation of the door (410), the plane of rotation extending across the opening,
wherein the door assembly (400) further comprises a privacy screen (440) movably mounted to the door (410), the privacy screen (440) being moveable across the opening between a retracted position, which allows passenger egress between the seat (100) and the aisle through the opening, and an extended position, in which passenger egress between the aisle and the seat (100) through the opening is at least partially blocked by the privacy screen (440).

2. An aircraft passenger accommodation unit (1000) as claimed in claim 1, wherein the door (410) is generally planar and wherein a plane of the door (410) is substantially parallel to the plane of rotation of the door (410).

3. An aircraft passenger accommodation unit (1000) as claimed in claim 1 or claim 2, wherein the door (410) is rotatable about an axis of rotation that intersects the door (410).

4. An aircraft passenger accommodation unit (1000) as claimed in any preceding claim, wherein the door (410) is rotatable about an axis of rotation that intersects the shell (200) behind a pivotal mounting joint (103) of the seat back (101) and seat pan (102).

5. An aircraft passenger accommodation unit (1000) as claimed in any preceding claim, wherein the door (410) is rotatable about an axis of rotation that intersects the shell (200) beneath an upper surface of the seat pan (102) of the seat (100).

6. An aircraft passenger accommodation unit (1000) as claimed in any preceding claim, wherein, when the door (410) is in the open position, the door (410) is located, at least partially, behind a pivotal mounting joint (103) of the seat back (101) and seat pan (102).

7. An aircraft passenger accommodation unit (1000) as claimed in any preceding claim, wherein, when the door (410) is in the closed position, a lower end of the door (410) is located at or below an upper surface of the seat pan (102).

8. An aircraft passenger unit (1000) as claimed in any preceding claim, wherein, in the retracted position, the privacy screen (440) at least partially overlaps the door (410) to define a first overlap area of the door (410), and in the extended position a second overlap area of the door (410) is defined, the second overlap area being smaller than the first overlap area.

9. An aircraft passenger accommodation (1000) unit as claimed in any preceding claim, wherein the unit comprises a securement mechanism (447) operable to secure the privacy screen (440) in the retracted position with respect to the door (410).

10. An aircraft passenger accommodation unit (1000) as claimed in any preceding claim, wherein the door assembly (400) comprises a stop mechanism (205) configured to prevent movement of the door (410) between the closed position and the open position when the privacy screen (440) is not in the retracted position.

11. An aircraft passenger accommodation unit (1000) as claimed in any preceding claim, wherein the seat (100) further comprises an armrest (105), and wherein the armrest is moveably mounted relative to the seat pan (102), such that the armrest can be moved between a deployed position, in which an upper surface of the armrest is above an upper surface of the seat pan (102), and a stowed position, in which the upper surface of the armrest is at or below the upper surface of the seat pan (102).

12. An aircraft passenger accommodation unit (1000) as claimed in any preceding claim, wherein the door (410) is rotatably mounted to the shell (200) by a rotation mechanism (206, 207, 430), the rotation mechanism comprising a first part fixedly connected to the shell (200) and a second part fixedly connected to the door (410), the first and second parts forming a kinematic pair comprising:
- a female cavity (207), and
- a corresponding male member (430),
wherein the male member is rotatably mounted within the female cavity, and
wherein the female cavity is provided on the shell (200) and wherein the female cavity is provided within a spar tube of the shell (200).

13. A method of opening or closing a door assembly (400) of an aircraft passenger accommodation unit (1000) as claimed in any preceding claim, the method comprising the step of rotating a door (410) of the door assembly (400) between an open position which allows passenger egress through an opening defined by a shell (200) of the aircraft passenger accommodation unit, and a closed position in which passenger egress through the opening is at least partially blocked, wherein the door (410) is rotated between the open and closed positions in a plane of rotation of the door, the plane of rotation extending across the opening.

14. The method of claim 13, wherein the method further comprises the step of, when the door (410) is in the closed configuration, moving a privacy screen (440) mounted to the door, the privacy screen (440) being moved across the opening between a retracted position, which allows passenger egress through the opening, and an extended position, in which passenger egress through the opening is at least partially blocked by the privacy screen (440).

## Patentansprüche

1. Flugzeugpassagier-Platzeinheit (1000) zur Anordnung neben einem Gang in einer Flugzeugkabine, wobei die Einheit (1000) umfasst:
- einen Sitz (100) mit einer Sitzschale (102) und einer Sitzlehne (101),
- eine Schale (200), die den Sitz (100) zumindest teilweise umgibt, wobei die Schale (200) eine Öffnung definiert, die einem Passagier den Austritt zwischen dem Gang und dem Sitz (100) durch die Öffnung ermöglicht, und
- eine Türanordnung (400), um einen variablen Zugang durch die Öffnung zwischen dem Gang und dem Sitz (100) bereitzustellen, wobei die Türanordnung (400) eine Tür (410) umfasst, die relativ zu der Schale (200) drehbar befestigt ist, so dass die Tür (410) zwischen einer offenen Position, die einem Passagier den Austritt durch die Öffnung ermöglicht, und einer geschlossenen Position, in der der Passagieraustritt durch die Öffnung zumindest teilweise blockiert ist, drehbar ist,
wobei die Tür (410) zwischen der offenen und der geschlossenen Position in einer Drehebene der Tür (410) drehbar ist, wobei sich die Drehebene über die Öffnung erstreckt, wobei die Türanordnung (400) ferner einen Sichtschutz (440) umfasst, der beweglich an der Tür (410) befestigt ist, wobei der Sichtschutz (440) über die Öffnung hinweg zwischen einer eingefahrenen Position, die dem Passagier den Austritt zwischen dem Sitz (100) und dem Gang durch die Öffnung ermöglicht, und einer ausgefahrenen Position, in der der Fahrgastaustritt zwischen dem Gang und dem Sitz (100) durch die Öffnung zumindest teilweise durch den Sichtschutz (440) blockiert ist, beweglich ist.

2. Flugzeugpassagier-Platzeinheit (1000) nach Anspruch 1, wobei die Tür (410) im Allgemeinen planar ist und wobei eine Ebene der Tür (410) im Wesentlichen parallel zur Drehebene der Tür (410) ist.

3. Flugzeugpassagier-Platzeinheit (1000) nach Anspruch 1 oder Anspruch 2, wobei die Tür (410) um eine Drehachse drehbar ist, die die Tür (410) schneidet.

4. Flugzeugpassagier-Platzeinheit (1000) nach einem der vorhergehenden Ansprüche, wobei die Tür (410) um eine Drehachse drehbar ist, die die Schale (200) hinter einer schwenkbaren Befestigungsverbindung (103) der Sitzlehne (101) und der Sitzschale (102) schneidet.

5. Flugzeugpassagier-Platzeinheit (1000) nach einem der vorhergehenden Ansprüche, wobei die Tür (410) um eine Drehachse drehbar ist, die die Schale (200) unterhalb einer oberen Fläche der Sitzschale (102) des Sitzes (100) schneidet.

6. Flugzeugpassagier-Platzeinheit (1000) nach einem der vorhergehenden Ansprüche, wobei die Tür (410), wenn die Tür (410) sich in der geöffneten Position befindet, zumindest teilweise hinter einer schwenkbaren Befestigungsverbindung (103) der Sitzlehne (101) und der Sitzschale (102) angeordnet ist.

7. Flugzeugpassagier-Platzeinheit (1000) nach einem der vorhergehenden Ansprüche, wobei, wenn sich die Tür (410) in der geschlossenen Position befindet, ein unteres Ende der Tür (410) an oder unterhalb einer oberen Fläche der Sitzschale (102) angeordnet ist.

8. Flugzeugpassagier-Einheit (1000) nach einem der vorhergehenden Ansprüche, wobei in der eingefahrenen Position der Sichtschutz (440) die Tür (410) zumindest teilweise überlappt, um einen ersten Überlappungsbereich der Tür (410) zu definieren, und in der ausgefahrenen Position ein zweiter Überlappungsbereich der Tür (410) definiert ist, wobei der zweite Überlappungsbereich kleiner als der erste Überlappungsbereich ist.

9. Flugzeugpassagier-Platzeinheit (1000) nach einem der vorhergehenden Ansprüche, wobei die Einheit einen Sicherungsmechanismus (447) umfasst, der betätigt werden kann, um den Sichtschutz (440) in der eingefahrenen Position in Bezug auf die Tür (410) zu sichern.

10. Flugzeugpassagier-Platzeinheit (1000) nach einem der vorhergehenden Ansprüche, wobei die Türanordnung (400) einen Stopp-Mechanismus (205) umfasst, der so konfiguriert ist, dass er eine Bewegung der Tür (410) zwischen der geschlossenen Position und der geöffneten Position verhindert, wenn sich der Sichtschutz (440) nicht in der eingefahrenen Position befindet.

11. Flugzeugpassagier-Platzeinheit (1000) nach einem der vorhergehenden Ansprüche, wobei der Sitz (100) ferner eine Armlehne (105) umfasst, und wobei die Armlehne relativ zur Sitzschale (102) beweglich angebracht ist, so dass die Armlehne zwischen einer ausgefahrenen Position, in der sich eine obere Fläche der Armlehne über einer oberen Fläche der Sitzschale (102) befindet, und einer verstauten Position, in der sich die obere Fläche der Armlehne an oder unter der oberen Fläche der Sitzschale (102) befindet, bewegt werden kann.

12. Flugzeugpassagier-Platzeinheit (1000) nach einem der vorhergehenden Ansprüche, wobei die Tür (410) durch einen Drehmechanismus (206, 207, 430) drehbar an der Schale (200) angebracht ist, wobei der Drehmechanismus einen ersten Teil, der fest mit der Schale (200) verbunden ist, und einen zweiten Teil, der fest mit der Tür (410) verbunden ist, umfasst, wobei der erste und der zweite Teil ein kinematisches Paar bilden, das Folgendes umfasst:
- einen weiblichen Hohlraum (207), und
- ein entsprechendes männliches Element (430),
wobei das männliche Element drehbar innerhalb des weiblichen Hohlraums angebracht ist, und
wobei der weibliche Hohlraum an der Schale (200) vorgesehen ist, und wobei der weibliche Hohlraum innerhalb eines Holmrohrs der Schale (200) vorgesehen ist.

13. Verfahren zum Öffnen oder Schließen einer Türbaugruppe (400) einer Flugzeugpassagier-Platzeinheit (1000) nach einem der vorhergehenden Ansprüche, wobei das Verfahren den Schritt des Drehens einer Tür (410) der Türbaugruppe (400) zwischen einer geöffneten Position, die den Passagieraustritt durch eine von einer Schale (200) der Flugzeugpassagier-Platzeinheit definierte Öffnung ermöglicht, und einer geschlossenen Position, in der der Passagieraustritt durch die Öffnung zumindest teilweise blockiert ist, umfasst, wobei die Tür (410) zwischen der geöffneten und der geschlossenen Position in einer Drehebene der Tür gedreht wird, wobei sich die Drehebene über die Öffnung hinweg erstreckt.

14. Verfahren nach Anspruch 13, wobei das Verfahren ferner den Schritt umfasst, dass, wenn sich die Tür (410) in der geschlossenen Konfiguration befindet, ein an der Tür angebrachter Sichtschutz (440) bewegt wird, wobei der Sichtschutz (440) über die Öffnung zwischen einer eingefahrenen Position, die den Fahrgastaustritt durch die Öffnung ermöglicht, und einer ausgefahrenen Position, in der der Fahrgastaustritt durch die Öffnung zumindest teilweise durch den Sichtschutz (440) blockiert ist, bewegt wird.

## Revendications

1. Unité de réception de passager d'aéronef (1000) pour un emplacement adjacent à une allée dans une cabine d'aéronef, l'unité (1000) comprenant :
- un siège (100), présentant une assise de siège (102) et un dossier de siège (101),
- une coque (200), entourant au moins partiellement le siège (100), dans laquelle la coque (200) définit une ouverture qui permet à un passager de sortir entre l'allée et le siège (100) à travers l'ouverture, et
- un ensemble porte (400), pour fournir un accès variable à travers l'ouverture entre l'allée et le siège (100), dans laquelle l'ensemble porte (400) comprend une porte (410) montée rotative par rapport à la coque (200), de telle sorte que la porte (410) peut tourner entre une position ouverte qui permet une sortie de passager à travers l'ouverture, et une position fermée dans laquelle la sortie de passager à travers l'ouverture est au moins partiellement bloquée,
dans laquelle la porte (410) peut tourner entre les positions ouverte et fermée dans un plan de rotation de la porte (410), le plan de rotation s'étendant à travers l'ouverture,
dans laquelle l'ensemble porte (400) comprend en outre un écran de confidentialité (440) monté de manière mobile sur la porte (410), l'écran de confidentialité (440) étant mobile à travers l'ouverture entre une position rétractée, qui permet une sortie de passager entre le siège (100) et l'allée à travers l'ouverture, et une position étendue, dans laquelle une sortie de passager entre l'allée et le siège (100) à travers l'ouverture est au moins partiellement bloquée par l'écran de confidentialité (440).

2. Unité de réception de passager d'aéronef (1000) selon la revendication 1, dans laquelle la porte (410) est généralement plane et dans laquelle un plan de la porte (410) est sensiblement parallèle au plan de rotation de la porte (410).

3. Unité de réception de passager d'aéronef (1000) selon la revendication 1 ou la revendication 2, dans laquelle la porte (410) peut tourner autour d'un axe de rotation qui recoupe la porte (410).

4. Unité de réception de passager d'aéronef (1000) selon l'une quelconque des revendications précédentes, dans laquelle la porte (410) peut tourner autour d'un axe de rotation qui recoupe la coque (200) derrière un joint de montage pivotant (103) du dossier de siège (101) et de l'assise de siège (102).

5. Unité de réception de passager d'aéronef (1000) selon l'une quelconque des revendications précédentes, dans laquelle la porte (410) peut tourner autour d'un axe de rotation qui recoupe la coque (200) sous une surface supérieure de l'assise de siège (102) du siège (100).

6. Unité de réception de passager d'aéronef (1000) selon l'une quelconque des revendications précédentes, dans laquelle lorsque la porte (410) est dans la position ouverte, la porte (410) est située, au moins partiellement, derrière un joint de montage pivotant (103) du dossier de siège (101) et de l'assise de siège (102).

7. Unité de réception de passager d'aéronef (1000) selon l'une quelconque des revendications précédentes, dans laquelle lorsque la porte (410) est dans la position fermée, une extrémité inférieure de la porte (410) est située au niveau ou en dessous d'une surface supérieure de l'assise de siège (102).

8. Unité de passager d'aéronef (1000) selon l'une quelconque des revendications précédentes, dans laquelle dans la position rétractée, l'écran de confidentialité (440) chevauche au moins partiellement la porte (410) pour définir une première zone de chevauchement de la porte (410), et dans la position étendue, une seconde zone de chevauchement de la porte (410) est définie, la seconde zone de chevauchement étant plus petite que la première zone de chevauchement.

9. Unité de réception de passager d'aéronef (1000) selon l'une quelconque des revendications précédentes, dans lequel l'unité comprend un mécanisme de fixation (447) opérationnel pour fixer l'écran de confidentialité (440) dans la position rétractée par rapport à la porte (410).

10. Unité de réception de passager d'aéronef (1000) selon l'une quelconque des revendications précédentes, dans laquelle l'ensemble porte (400) comprend un mécanisme d'arrêt (205) configuré pour empêcher un déplacement de la porte (410) entre la position fermée et la position ouverte lorsque l'écran de confidentialité (440) n'est pas dans la position rétractée.

11. Unité de réception de passager d'aéronef (1000) selon l'une quelconque des revendications précédentes, dans laquelle le siège (100) comprend en outre un accoudoir (105), et dans laquelle l'accoudoir est monté de manière mobile par rapport à l'assise de siège (102), de sorte que l'accoudoir peut être déplacé entre une position déployée, dans laquelle une surface supérieure de l'accoudoir se trouve au-dessus d'une surface supérieure de l'assise de siège (102), et une position rangée, dans laquelle la surface supérieure de l'accoudoir se trouve au niveau ou au-dessous de la surface supérieure de l'assise de siège (102).

12. Unité de réception de passager d'aéronef (1000) selon l'une quelconque des revendications précédentes, dans laquelle la porte (410) est montée de manière rotative sur la coque (200) par un mécanisme de rotation (206, 207, 430), le mécanisme de rotation comprenant une première partie reliée de manière fixe à la coque (200) et une seconde partie reliée de manière fixe à la porte (410), les première et seconde parties formant une paire cinématique comprenant :
- une cavité femelle (207), et
- un élément mâle correspondant (430),
dans laquelle l'élément mâle est monté rotatif à l'intérieur de la cavité femelle, et
dans laquelle la cavité femelle est fournie sur la coque (200) et dans lequel la cavité femelle est fournie à l'intérieur d'un tube de longeron de la coque (200).

13. Procédé d'ouverture ou de fermeture d'un ensemble porte (400) d'une unité de réception de passager d'aéronef (1000) selon l'une quelconque des revendications précédentes, le procédé comprenant l'étape consistant à faire tourner une porte (410) de l'ensemble porte (400) entre une position ouverte qui permet une sortie de passager à travers une ouverture définie par une coque (200) de l'unité de réception de passager d'avion, et une position fermée dans laquelle la sortie de passager à travers l'ouverture est au moins partiellement bloquée, dans lequel la porte (410) est tournée entre les positions ouverte et fermée dans un plan de rotation de la porte, le plan de rotation s'étendant à travers l'ouverture.

14. Procédé selon la revendication 13, dans lequel le procédé comprend en outre l'étape consistant à, lorsque la porte (410) est dans la configuration fermée, déplacer un écran de confidentialité (440) monté sur la porte, l'écran de confidentialité (440) étant déplacé à travers l'ouverture entre une position rétractée, qui permet une sortie de passager à travers l'ouverture, et une position étendue, dans laquelle la sortie de passager à travers l'ouverture est au moins partiellement bloquée par l'écran de confidentialité (440).
